Europäisches Patentamt

(19) European Patent Office

Office européen des brevets

(11) Veröffentlichungsnummer: **0 006 133**
**B1**

(12) **EUROPÄISCHE PATENTSCHRIFT**

(45) Veröffentlichungstag der Patentschrift:
21.04.82

(21) Anmeldenummer: 79101481.4

(22) Anmeldetag: 15.05.79

(51) Int. Cl.³: **H 04 Q 11/04,** H 04 Q 3/54

(54) Indirekt gesteuerte Vermittlungsanlage mit Zeitkanalverbindungswegen, insbesondere Fernsprechvermittlungsanlage.

(30) Priorität: 14.06.78 DE 2826063

(43) Veröffentlichungstag der Anmeldung:
09.01.80 Patentblatt 80/1

(45) Bekanntmachung des Hinweises auf die Patenterteilung:
21.04.82 Patentblatt 82/16

(84) Benannte Vertragsstaaten:
AT CH FR GB IT NL SE

(56) Entgegenhaltungen:
DE-A-2 602 159
1978 INTERNATIONAL CONFERENCE ON
COMMUNICATIONS, Band 3, 4—7 Juni 1978,
Toronto, CA,
ARRIGONI et al.: »Proteo: An example
of system flexibility for introduction
in a telecom network«,
Seiten 37.1.1 bis 37.1.5
NTC'77 CONFERENCE RECORD, Band 3,
1—3, 8 Dezember 1977,
New York, US
SVALA: »DSS-1, A digital local switching system
with remote line switches«,
Seiten 39.5-1 bis 39.5-7
1978 INTERNATIONAL CONFERENCE ON
COMMUNICATIONS, Band 2, 4—7 Juni 1978,
Toronto, CA,
CESARATTO et al.: »DMS-200 control
structure«, Seiten 32.2.1 bis 32.2.5
PROCEEDINGS NATIONAL ELECTRONIC
CONFERENCE,
Band 31, 1977,
New York, US
SCOTT: »Local digital switching control
concepts«, Seiten 39, 40, 42
ELECTRICAL COMMUNICATION, Band 42,
Heft 3, 1976,
London, GB

(73) Patentinhaber: SIEMENS AKTIENGESELLSCHAFT Berlin
und München, Postfach 22 02 61, D-8000 München 22 (DE)

(72) Erfinder: Botsch, Dietrich, Dr., Bertelestrasse 60a,
D-8000 München 71 (DE)
Erfinder: Brüninghaus, Karl, Dipl.-Ing., Buchenstrasse 19,
D-8021 Sauerlach (DE)

DEJEAN et al.: »Dispersed telecommunication
network structure«, Seiten 402—414
CONFERENCE ON SWITCHING TECHNIQUES
FOR TELECOMMUNICATIONS NETWORKS,
April 1969,
London, GB,
WARD et al.: »A multi processor
control unit for a stored program
switching system«, Seiten 123—126
1978 INTERNATIONAL ZURICH SEMINAR
ON DIGITAL COMMUNICATIONS, 7—9 März
1978,
Zürich, CH,
HORIKI et al.: »Design philosophies
on local digital switching systems«,
Seiten B.2.1 bis B.2.5
TELCOM REPORT, Band 2, Heft 3,
März 1979,
München, DE,
SUCKFULL: »Architektur einer neuen
Linie digitaler öffentlicher
Fernsprechvermittlungen«,
Seiten 179—183
INTERNATIONAL SWITCHING SYMPOSIUM,
Oktober 1976,
Kyoto, JP,
ALTEHAGE et al.: »PCM switching
system EWSD with TDM switching
network for long-distance and
local transit traffic«,
Seiten 141-4-1 bis 141-4-6

Indirekt gesteuerte Vermittlungsanlage mit Zeitkanalverbindungswegen,
insbesondere Fernsprechvermittlungsanlage

Die Erfindung bezieht sich auf den Aufbau und die Gliederung von indirekt gesteuerten Vermittlungsanlagen mit Zeitkanalverbindungswegen, wie sie insbesondere für Fernsprechzwecke vorgesehen sind. Es ist bereits bekannt, solche Vermittlungsanlagen für eine mehr oder weniger große Anzahl von Teilnehmerstellen zu erstellen. Dementsprechend haben solche Vermittlungsanlagen eine mehr oder weniger große Anzahl von Zeitkanalkopplern, über die Zeitkanäle geführt sind, welche für Gesprächsverbindungen erforderliche Signale übertragen, die auch in Form von PCM-Signalen auftreten können (siehe z. B. DE-AS 2 211 400, 2 225 702, 2 225 703; DE-PS 2 454 144).

Die Erfindung stellt sich nun die Aufgabe, für eine derartige Anlage Erweiterungs- und Ausbaustufen in zweckmäßiger Weise vorzusehen. Entsprechend den Erweiterungsstufen können vorhandene Anlagen ergänzt werden, damit eine größere Anzahl von Teilnehmerstellen als vorher angeschlossen werden kann. Die Erweiterungsstufen sind hier zugleich Ausbaustufen, da um solche Stufen ergänzte Anlagen von vornherein geliefert werden können, wenn eine dementsprechend große Anzahl von Teilnehmerstellen anzuschließen ist.

Die Erfindung betrifft also eine indirekt gesteuerte Vermittlungsanlage mit Zeitkanalverbindungswegen, insbesondere Fernsprechvermittlungsanlage. Gemäß der Erfindung ist diese Anlage dadurch gekennzeichnet, daß die für sie vorgesehenen Erweiterungs- und Ausbaustufen wie folgt gegliedert sind:

a)  an den einstufigen blockierungsfreien Zeitkanalkoppler der ersten Ausbaustufe, der mit einer Kopplersteuerung und mit einer Dämpfungsschaltung ausgerüstet ist, sind Teilnehmeranschlußschaltungen angeschlossen, die jeweils individuell BORSHT-Einrichtungen sowie gegebenenfalls Filter und PCM-Codecs haben; an den Zeitkanalkoppler ist ferner eine Signalschaltung mit Tongenerator, Rufgenerator, Codesender und -empfänger angeschlossen; die Teilnehmeranschlußschaltungen, die Signalschaltung und die Kopplersteuerung sind an ein dezentrales Steuerwerk mit Leitwerk, Verarbeitungswerk und Speicher über einen zugehörigen Zeichenpuffer angeschlossen;

b)  für die zweite Ausbaustufe sind die Zeitkanalkoppler einiger erster Ausbaustufen in allen Kombinationen über Zwischenleitungen verbunden, über die Zeitkanäle geführt sind; außerdem sind die dezentralen Steuerwerke durch die Zeitkanalkoppler der ersten Ausbaustufe mit einem entsprechend aufgebauten zentralen Steuerwerk verbunden, das beim Aufbau und Abbau von Verbindungswegen mitwirkt, die über mehrere erste Ausbaustufen führen;

c)  bei der dritten Ausbaustufe führen die Zwischenleitungen der zweiten Ausbaustufe, die dazu dienen, in einer größeren Anzahl vorgesehene Zeitkanalkoppler der ersten Ausbaustufe miteinander zu verbinden, als Zwischenleitungen der dritten Ausbaustufe zu einem mit mehreren weiteren Zeitkanalkopplern und mit einer eigenen, mit dem zentralen Steuerwerk verbundener. Koppelfeldsteuerung ausgestatteten einstufigen zentralen Koppelfeld, über das Verbindungen zwischen diesen Zwischenleitungen in der Weise durchschaltbar sind, daß sie jeweils auf über diese Zwischenleitungen verlaufende Zeitkanäle beschränkt sind;

d)  bei weiteren Ausbaustufen hat das zentrale Koppelfeld zwei Zeitkanalkoppelstufen, zwischen denen eine oder mehrere Raumkanalkoppelstufen eingefügt sind.

Die Teilnehmeranschlußschaltungen haben dabei also jeweils individuell BORSHT-Einrichtungen, die zur Speisung, zum Überspannungsschutz, zur Rufanschaltung, zur Signalisierung und für Prüfzwecke dienen (siehe 1978 International Zurich Seminar of Digital Communications, Proceedings. IEEE Catalogue Nr. 78 CH 1325-0 ASST, Seiten B 2.1, A 4.1). Diese Einrichtungen können auch zugleich zur 2/4-Drahtumsetzung dienen. Werden die Teilnehmeranschlußschaltungen vor den zugehörigen Teilnehmerstellen nicht bereits mit PCM-Signalen beliefert, so sind die BORSHT-Einrichtungen jeweils noch durch Filter und PCM-Codes zu ergänzen.

Die gemäß der Erfindung vorgesehenen Erweiterungs- und Ausbaustufen haben den Vorteil, daß eine Anlage jeweils erweitert werden kann, ohne daß vorher hierfür ins Gewicht fallende Vorleistungen vorzusehen sind. Bei den verschiedenen Erweiterungsstufen werden nämlich jeweils die bereits vorher vorhandenen Einrichtungen weitgehend beibehalten und durch zusätzliche Einrichtungen ergänzt.

Dementsprechend können auch bei den verschiedenen Ausbaustufen nach dem Baukastenprinzip weitgehend die gleichen Teileinrichtungen verwendet werden. Durch die Verteilung der Steuervorgänge auf ein oder mehrere dezentrale Steuerwerke und ein zentrales Steuerwerk ergibt es sich daß Steuerwerke benutzt werden können, die eindeutig voneinander abgegrenzte Steuerabschnitte abzuwickeln haben und dadurch auch über eindeutig festlegbare Funktionsschnittstellen zur Zusammenarbeit gebracht werden können.

Es ist zwar bereits bekannt (siehe 1978 International Zurich Seminar . . ., Seiten B 2.1 bis B 2.5) eine vergleichbare Anlage mit BORSHT-Einrichtungen und Filter und PCM-Codes auszustatten. Dort sind jedoch die Teilnehmerstellen zunächst an ein zur Verkehrskonzentration dienendes Raumkoppelfeld angeschlossen, das mit Hilfe von hoch belastbaren elektronischen Schaltern aufgebaut ist. Außerdem ist dort empfohlen, die erwähnten BORSHT-Einrichtungen jeweils Gruppen von Teilnehmerstellen zuzuordnen. Wenn im Unterschied dazu diese Einrichtungen individuell zu den Teilnehmeranschlußschaltungen gehören und wenn sie teilnehmerseitig vor dem Koppelfeld der Anlage eingesetzt sind, können sie zugleich zur Herabsetzung des Signalpegels dienen. Die für das Koppelfeld zu verwendenden elektronischen Schalter können dann vorteilhafterweise bequem in integrierten Schaltungen zusammengefaßt werden. Bei solchen bekannten vergleichbaren Anlagen fehlen auch die Maßnahmen, die bei der Erfindung zu zweckmäßigen Erweiterungen und Ausbaustufen führen (siehe auch DE-PS 2 454 144).

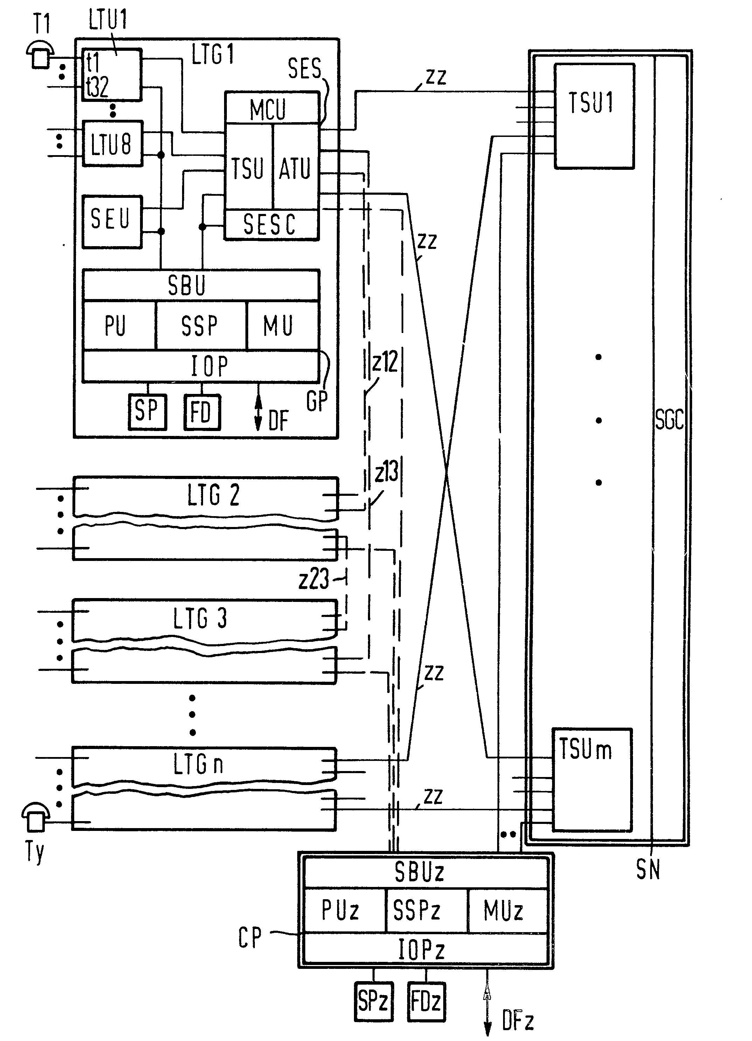

Beispiele für die erfindungsgemäße Gliederung einer Vermittlungsanlage in Erweiterungs- und Ausbaustufen werden im folgenden anhand der Figur näher erläutert. Die Einzelheiten der Anlage sind hier nur soweit gezeigt, wie sie für die Erfindung von Bedeutung sind, die sich in erster Linie auf die Gliederung in verschiedene Teileinrichtungen auswirken. Dort ist eine erste Ausbaustufe LTG 1 gezeigt, die den Zeitkanalkoppler TSU hat, der mit der Kopplersteuerung SESC und mit der Dämpfungsschaltung ATU ausgerüstet ist. Die Kopplersteuerung SESC bekommt Einstellbefehle von dem dezentralen Steuerwerk GP. Die Dämpfungsschaltung ATU kann Dämpfungsunterschiede bei den über Teilnehmeranschlußschaltungen an den Zeitkanalkoppler TSU angeschlossenen Teilnehmerleitungen ausgleichen, die zu den Teilnehmerstellen, wie zu der Teilnehmerstelle T1, führen. Zur Teilnehmerstelle T1 gehört die Teilnehmeranschlußschaltung t1. Die Teilnehmeranschlußschaltungen sind hier zu Mehrfachanschlußschaltungen gruppenweise zusammengefaßt. So sind die Teilnehmeranschlußschaltungen t1 ... t32 zur Mehrfachanschlußschaltung LTU1 zusammengefaßt. Jedoch haben die Teilnehmeranschlußschaltungen hier jeweils individuell die bereits beschriebenen BORSHT-Einrichtungen sowie gegebenenfalls auch individuell Filter und PCM-Codecs. Es sind hier bei der ersten Ausbaustufe LTG1 mehrere Mehrfachanschlußschaltungen vorgesehen, zu denen auch noch die Mehrfachanschlußschaltung LTU8 gehört. Es können auch entsprechende Mehrfachanschlußschaltungen vorgesehen sein, bei denen mehrere Verbindungsleitungsanschlußschaltungen zusammengefaßt sind, an die Verbindungsleitungen angeschlossen sind, die beispielsweise zu anderen Vermittlungsanlagen führen. Falls von dort bereits Signale mit PCM-Code eintreffen, sind bei diesen Mehrfachanschlußschaltungen keine PCM-Codecs erforderlich. An den Zeitkanalkoppler TSU ist ferner die Signalschaltung SEU angeschlossen, in der Tongenerator, Rufgenerator, Codesender und -empfänger zusammengefaßt sind. Diese Signalschaltung kann demgemäß die verschiedenen Hörtöne sowie

Rufzeichen und sonstige benötigten Codezeichen liefern. Außerdem kann sie solche Zeichen auch für ihre Auswertung empfangen. Die Teilnehmeranschlußschaltungen t1 ... t32 und die weiteren sowie die Signalschaltung SEU sind an das Steuerwerk GP und an den Zeitkanalkoppler TSU angeschlossen. Diese Einrichtungen können daher über den Zeitkanalkoppler TSU fallweise miteinander verbunden werden. Außerdem können sie auch Steuersignale mit dem Steuerwerk GP austauschen und zwar über den zugehörigen Zeichenpuffer SBU, mit dessen Hilfe ein störender Zeitzwang dabei vermieden wird. Zu diesem Steuerwerk gehört noch das Leitwerk SSP, das Verarbeitungswerk PU, der Speicher MU und die Ein-Ausgabesteuerung IOP, an die noch der Hintergrundspeicher FD und das Bedienungsgerät SP angeschlossen sind. Dort ist noch der Datenfernübertragungsanschluß DF vorgesehen, über den gegebenenfalls mit anderen Vermittlungen Steuerdaten ausgetauscht werden können. Die erste Ausbaustufe LTG1 ist hier offensichtlich bereits eine komplette und voll funktionsfähige Vermittlungsanlage.

Mehrere solcher erster Ausbaustufen können nun auch zu einer größeren Vermittlungsanlage zusammengefaßt werden. Dies ist auch aus der Figur ersichtlich. Dort sind die Zeitkanalkoppler TSU der ersten Ausbaustufen LTG1, LTG2 und LTG3 in allen Kombinationen über die Zwischenleitungen z12, z13 und z23 verbunden, über die Zeitkanäle geführt sind. Außerdem sind die zugehörigen Steuerwerke GP mit dem entsprechend aufgebauten zentralen Steuerwerk CP verbunden. Dieses zentrale Steuerwerk wirkt beim Aufbau und Abbau von Verbindungswegen mit, die über mindestens zwei der Ausbaustufen LTG1, LTG2 und LTG3 führen. Dabei veranlaßt das zentrale Steuerwerk CP außerdem, daß die anderen Steuerwerke für den Aufbau und Abbau von Verbindungswegen sinngemäß in Anspruch genommen werden. Zum zentralen Steuerwerk CP gehören der Zeichenpuffer SBUz, das Leitwerk SSPz, das Verarbeitungswerk PUz, der Speicher MUz und die Ein-Ausgabesteuerung IOPz, an die der Hintergrundspeicher FDz und das Bedienungsgerät SPz angeschlossen sind. Außerdem ist dort noch der Datenfernübertragungsanschluß DFz vorgesehen. Man erkennt, daß für das Zustandekommen dieser ebenfalls voll funktionsfähigen Vermittlungsanlage bei den jeweils zugehörigen ersten Ausbaustufen wesentliche Vorleistungen nicht erforderlich sind.

Sind so viele Teilnehmerstellen an die Vermittlungsanlage anzuschließen, daß eine größere Anzahl erster Ausbaustufen benötigt werden, beispielsweise maximal ca. 15, so werden die Zeitkanalkoppler der ersten Ausbaustufe nicht direkt über Zwischenleitungen verbunden sondern über Zwischenleitungen zz mit einem einstufigen zentralen Koppelfeld SN mit mehreren Zeitkanalkopplern TSU1 ... TSUm verbunden. Dieses zentrale Koppelfeld hat die eigene Koppelfeldsteuerung SGC, das Einstellbefehle von dem zentralen Steuerwerk CP erhalten kann. Mit dem Koppelfeld SN sind über die erwähnten Zwischenleitungen hier die ersten Ausbaustufen LTG1 ... LTGn verbunden, an die die Teilnehmerstellen T1 ... Ty angeschlossen sind. Das zentrale Steuerwerk CP ist hier auch mit den Zeitkanalkopplern TSU1 ... TSUm des Koppelfeldes SN verbunden. Es können daher alle in der Figur eingezeichneten gestrichelten Zwischenleitungen und Verbindungsleitungen entfallen, die bei der zweiten Ausbaustufe benutzt wurden. Bei der Erweiterung bzw. beim Ausbau zur dritten Ausbaustufe entfallen daher offensichtlich lediglich kaum ins Gewicht fallende vorher vorgesehene Einrichtungen. Die zugehörigen ersten Ausbaustufen LTG1 ... LTGn und das zentrale Koppelfeld SN können mit gleichen Zeitkanalkopplern ausgerüstet werden.

Wenn die Anzahl der Teilnehmerstellen sehr groß wird und damit die Anzahl der ersten Ausbaustufen ebenfalls ziemlich groß wird, ist das zentrale Koppelfeld SN mit mehreren Koppelstufen auszurüsten. Zweckmäßigerweise werden dabei zwei Zeitkanalkoppelstufen vorgesehen, zwischen denen eine oder mehrere Raumkanalkoppelstufen eingefügt sind (siehe DE-AS 2 021 049; 1978 International Zurich Seminar ..., Seiten B 6.1 bis B 6.6). Es empfiehlt sich dann, beim zentralen Koppelfeld SN auch Laufzeitausgleichseinrichtungen vorzusehen. Es werden dann störende Beschränkungen bezüglich der räumlichen Ausdehnung der Anlage vermieden. Laufzeitunterschiede wegen beträchtlicher räumlicher Ausdehnung können nämlich dann durch die Laufzeitausgleichseinrichtungen ausgeglichen werden.

Ein Steuerwerk der ersten Ausbaustufe, wie das Steuerwerk GP, wickelt in jedem Fall solche Vermittlungsfunktionen ab, die für jede Verbindungsanforderungen anfallen und die unter Zeitzwang stehen. Dazu gehören das Abfragen von Teilnehmerschaltungen, die Verarbeitung von Vermittlungssignalen, die insbesondere von Teilnehmerschaltungen oder über Verbindungsleitungen geliefert werden, die Gebührenerfassung, wobei z. B. Gebührenimpulse gezählt werden, und die Lieferung von Einstellbefehlen für die Kopplersteuerung. Das gegebenenfalls vorhandene zentrale Steuerwerk CP wickelt dagegen Vermittlungsfunktionen ab, die den Zusammenhang der Teileinrichtungen der Anlage und deren Zusammenhang mit anderen Anlagen berücksichtigen müssen. Dazu gehört die Bewertung von gewählten Ziffern von Rufnummern, die Suche von zu benutzenden Koppelfeldausgängen, die Suche und Auswahl von Verbindungswegen und die Leitweglenkung. Dadurch werden die Steuerwerke der ersten Ausbaustufe entlastet. Jedoch hat das zentrale Steuerwerk CP keine Routineaufgaben, die unter besonders großem Zeitzwang stehen. Dies erleichtert die Zusammenarbeit mit den dezentralen Steuerwerken. Die Verarbeitung von Vermittlungssignalen in den dezentralen Steuerwerken ermöglicht vorteilhafterweise, daß der Austausch von Meldungen zwischen den dezentralen Steuerwerken und dem zentralen Steuerwerk CP über eine standardisierte Funktionsschnittstelle abgewickelt werden kann. Die Art des jeweils angewendeten Signalisierungssystems hat daher keine Rückwirkung auf die Arbeitsweise und auf den Schaltungsaufbau des zentralen Steuerwerks CP. Dabei können verschiedene Signalisierungssysteme vorgesehen sein, wie z. B. Gleichstromsignalisierung, Wechselstromsignalisierung, Mehrfrequenzencodezeichensignalisierung oder digitale Signalisierung.

Es empfiehlt sich, das zentrale Steuerwerk CP und das mehrstufige zentrale Koppelfeld SN jeweils doppelt vorzusehen. In der Figur ist dies dadurch angedeutet, daß diese Einrichtungen doppelt umrahmt sind. Dadurch wird ein Ausfall der gesamten Anlage vermieden, wenn eine der doppelt vorgesehenen Einrichtungen ausfällt. Ein Ausfall der nicht doppelt vorgesehenen Einrichtungen beeinträchtigt nicht die Arbeitsweise der übrigen Teile der Anlage und kann daher in der Regel in Kauf genommen werden. Die doppelt vorgesehenen Einrichtungen können sich auch gegenseitig überwachen, was insbesondere für das zentrale Steuerwerk gilt (siehe z. B. DE-OS 1 524 239; DE-AS 1 965 314, 2 104 298). Dabei können auch fehlerbehaftete Stellen innerhalb dieser Einrichtungen ermittelt werden, was zu einer schnellen Fehlerbeseitigung wesentlich beiträgt.

Auch bei den nicht doppelt vorgesehenen Einrichtungen können Methoden zur Fehlererkennung und Feststellung von fehlerbehafteten Stellen durchgeführt werden. Hierzu kann ein dezentrales Steuerwerk, wie das Steuerwerk GP, jeweils routinemäßig die zugehörigen Teileinrichtungen, wie das Koppelfeld SES, die Signalschaltung SEU, die Teilnehmeranschlußschaltungen t ... t32 ... überprüfen und mit Hilfe von Zeitmessungen überwachen. Mit Hilfe der Zeitmessungen wird überwacht, ob die verschiedenen Vermittlungsvorgänge in der vorgesehenen normalen Zeit ablaufen. Es wird Alarm veranlaßt, falls unzulässige Zeitüberschreitungen auftreten. Die dezentralen Steuerwerke führen ferner im Zuge von Mitlaufüberwachungen Durchschalteprüfungen im Koppelnetz durch, wobei Prüfmuster abgeschickt werden, die dann wieder richtig zu empfangen sind. Dabei können sich auch Hinweise auf fehlerhafte Stellen ergeben. Fehlermeldungen können dann zum gegebenenfalls vorhandenen zentralen Steuerwerk CP weitergeleitet werden, das dann daraufhin Befehle zur Sperrung von fehlerhaften Teileinrichtungen oder zur Ersatzschaltung liefern kann. Diese Fehlermeldungen können über die sowieso vorhandenen Verbindungen zwischen den dezentralen Steuerwerken und dem zentralen Steuerwerk CP geschickt werden. Besondere Leitungssysteme für Fehlermeldungen oder Alarmsignale sind daher nicht erforderlich. Es sind auch keine besonderen Ersatzschalteitungssysteme erforderlich. Die Ersatzschal-

tung wird durch das Vorhandensein der doppelt vorgesehenen Einrichtungen erleichtert.

Das Koppelfeld der ersten Ausbaustufe, wie das Koppelfeld SES, ist noch mit einer Multikonferenzeinrichtung MCU ausgerüstet. Es können daher auch Verbindungen zustande gebracht werden, bei denen mehr als zwei Teilnehmerstellen beteiligt sind. Diese Einrichtung kann auch dazu beitragen, die Funktionsfähigkeit einer ersten Ausbaustufe bei Störungen im zugehörigen Zeitkanalkoppler TSU aufrecht zu erhalten, wenn auch im eingeschränkten Umfang.

Die dezentralen und zentralen Steuerwerke einer Anlage haben jeweils einen Speicher, in dem für den Betrieb der Anlage erforderliche Daten zu speichern sind. Der Betrieb der Anlage wird erleichtert und verbessert, wenn diese Daten dort zweckmäßigerweise verteilt sind. Hierzu sind in einem Speicher eines Steuerwerks der ersten Ausbaustufe jeweils variable Daten enthalten, wie Daten über jeweils bestehende Verbindungen, Daten über Belegung von Zeitkanälen, Daten über verbindungsindividuell angefallene Gebührenimpulse. Im Speicher MUz eines zentralen Steuerwerks CP sind dagegen permanente Daten enthalten, die Daten für die Ziffernbewertung und für die Verzonung, Daten über Teilnehmerstellen, Daten über den Zusammenhang der Koppelfelder und sonstiger Teileinrichtungen der Anlage. Außerdem sind dort auch noch variable Daten über den Belegungszustand von Teilnehmerstellen, Zwischenleitungen und Verbindungsleitungen und über den Betriebszustand von sonstigen Teileinrichtungen vorhanden. Dadurch, daß die erwähnten variablen Daten auch in den Speichern von dezentralen Steuerwerken enthalten sind, kann bei einer Störung eines zentralen Steuerwerkes der Vermittlungsbetrieb durch Ausnutzung dieser Daten weitergeführt werden. Sie können auch zur Rekonstruierung der im gestörten zentralen Steuerwerk enthaltenen variablen Daten benutzt werden. Es kann sich empfehlen, im Speicher des zentralen Steuerwerks als variable Daten von vornherein auch die Daten über jeweils bestehende Verbindungswege zu speichern.

**Patentansprüche**

1. Indirekt gesteuerte Vermittlungsanlage mit Zeitkanalverbindungswegen, insbesondere Fernsprechvermittlungsanlage, dadurch gekennzeichnet, daß die für die Anlage vorgesehenen Erweiterungs- und Ausbaustufen wie folgt gegliedert sind

a) an den einstufigen blockierungsfreien Zeitkanalkoppler (TSU) der ersten Ausbaustufe (LTG1), der mit einer Kopplersteuerung (SESC) und mit einer Dämpfungsschaltung (ATU) ausgerüstet ist, sind Teilnehmeranschlußschaltungen (t1 ... t32, ...) angeschlossen, die jeweils individuell BORSHT-Einrichtungen sowie gegebenenfalls Filter und PCM-Codecs haben; an den Zeitkanalkoppler (TSU) ist ferner eine Signalschaltung (SEU) mit Tongenerator, Rufgenerator, Codesender und -empfänger angeschlossen; die Teilnehmeranschlußschaltungen (t1 ... t32 ...), die Signalschaltung (SEU) und die Kopplersteuerung (SESC) sind an ein dezentrales Steuerwerk (GP) mit Leitwerk (SSP), Verarbeitungswerk (PU) und Speicher (MU) über einen zugehörigen Zeichenpuffer (SBU) angeschlossen;

b) für die zweite Ausbaustufe sind die Zeitkanalkoppler (TSU ...) einiger erster Ausbaustufen (LTG1, LTG2, LTG3) in allen Kombinationen über Zwischenleitungen (z12, z13, z23) verbunden, über die Zeitkanäle geführt sind; außerdem sind die dezentralen Steuerwerke (GP ...) durch die Zeitkanalkoppler (TSU) der ersten Ausbaustufe mit einem entsprechend aufgebauten zentralen Steuerwerk (CP) verbunden, das beim Aufbau und Abbau von Verbindungswegen mitwirkt, die über mehrere erste Ausbaustufen (z. B. LTG1, LTG2) führen;

c) bei der dritten Ausbaustufe führen die Zwischenleitungen (z12, z13, z23) der zweiten Ausbaustufe, die dazu dienen, in einer größeren Anzahl vorgesehene Zeitkanalkoppler der ersten Ausbaustufe miteinander zu verbinden, als Zwischenleitungen (zz) der dritten Ausbaustufe zu einem mit mehreren weiteren Zeitkanalkopplern (TSU1 ... TSUm) und mit einer eigenen, mit dem zentralen Steuerwerk (CP) verbundenen Koppelfeldsteuerung (SGC) ausgestatteten, einstufigen zentralen Koppelfeld (SN), über das Verbindungen zwischen diesen Zwischenleitungen (zz) in der Weise durchschaltbar sind, daß sie jeweils auf über diese Zwischenleitungen (zz) verlaufende Zeitkanäle beschränkt sind;

d) bei weiteren Ausbaustufen hat das zentrale Koppelfeld (SN) zwei Zeitkanalkoppelstufen, zwischen denen eine oder mehrere Raumkanalkoppelstufen eingefügt sind.

2. Vermittlungsanlage nach Anspruch 1, dadurch gekennzeichnet, daß das zentrale Steuerwerk (CP) und das mehrstufige zentrale Koppelfeld (SN) doppelt vorgesehen sind.

3. Vermittlungsanlage nach Anspruch 1 oder 2, dadurch gekennzeichnet, daß das dezentrale Steuerwerk (GP) der ersten Ausbaustufe (LTG1) Vermittlungsfunktionen abwickelt, die für jede Verbindungsanforderung anfallen und unter Zeitzwang stehen, wie das Abfragen von Teilnehmerschaltungen, die Verarbeitung von Vermittlungssignalen, die Gebührenerfassung, die Lieferung von Einstellbefehlen für die Kopplersteuerung, daß dagegen das zentrale Steuerwerk (CP) Vermittlungsfunktionen abwikkelt, die den Zusammenhang der Teileinrichtungen der Anlage und deren Zusammenhang mit anderen Anlagen berücksichtigen müssen und die dezentralen Steuerwerke (GP) der ersten Ausbaustufe entlasten, wie die Bewertung von gewählten Ziffern, von Rufnummern, die Suche von zu benutzenden Koppelfeldausgängen, die Suche und Auswahl von Verbindungswegen und die Leitweglenkung.

4. Vermittlungsanlage nach Anspruch 3, dadurch gekennzeichnet, daß das Steuerwerk (GP) der ersten Ausbaustufe routinemäßig die zugehörigen Teileinrichtungen, wie Koppelfeld (SES), Signalschaltung (SEU), Teilnehmeranschlußschaltungen (t1 ... t32, ...) überprüft und mit Hilfe von Zeitmessungen überwacht, daß das zentrale Steuerwerk (CP) aufgrund von Fehlermeldungen Befehle zur Sperrung von Teileinrichtungen oder zur Ersatzschaltung liefert.

5. Vermittlungsanlage nach einem der vorhergehenden Ansprüche, dadurch gekennzeichnet, daß in dem Speicher (MU) des dezentralen Steuerwerks (GP) der ersten Ausbaustufe variable Daten enthalten sind, wie Daten über jeweils bestehende Verbindungen, Daten über Belegung von Zeitkanälen, Daten über verbindungsindividuell angefallene Gebührenimpulse, daß dagegen im Speicher (MUz) des zentralen Steuerwerks (CP) permanente Daten enthalten sind, wie Daten für die Ziffernbewertung und für die Verzonung, Daten über Teilnehmerstellen, Daten über den Zusammenhang der Koppelfelder und sonstiger Teileinrichtungen der Anlage sowie variable Daten über den Belegungszustand von Teilnehmerstellen, Zwischenleitungen und Verbindungsleitungen und über den Betriebszustand von sonstigen Teileinrichtungen.

6. Vermittlungsanlage nach einem der vorhergehenden Ansprüche, dadurch gekennzeichnet, daß das Koppelfeld (SES) der ersten Ausbaustufe und das zentrale Koppelfeld (SN) der übrigen Ausbaustufen mit gleichen Zeitkanalkopplern (TSU, TSU1 ... TSUm) ausgerüstet sind, die beim zentralen Koppelfeld (SN) durch Laufzeitausgleichseinrichtungen ergänzt sind.

7. Vermittlungsanlage nach einem der vorhergehenden Ansprüche, dadurch gekennzeichnet, daß das Koppelfeld (SES) der ersten Ausbaustufe mit einer Multikonferenzeinrichtung (MCU) ausgerüstet ist.

8. Vermittlungsanlage nach einem der vorhergehenden Ansprüche, dadurch gekennzeichnet, daß die Teilnehmeranschlußschaltungen (z. B. t1 ... t32) zu Mehrfachanschlußschaltungen (LTU1) gruppenweise zusammengefaßt sind.

9. Vermittlungsanlage nach einem der vorhergehenden Ansprüche, dadurch gekennzeichnet, daß Mehrfachanschlußschaltungen aus Verbindungsleitungsanschlußschaltungen vorgesehen sind.

**Claims**

1. Indirectly controlled exchange system comprising time channel connection paths, in particular a telephone exchange system, characterised in that the extension and development stages provided for the system are classified as follows:

a) the one-stage, non-blocking time channel switch (TSU) of the first development stage (LTG1) which is equipped with a switch control unit (SESC) and with an attenuation circuit (ATU) is connected to subscriber connection circuits (t1 ... t32 ...) each of which possesses individual BORSHT devices and possibly filters and PCM codecs; the time channel switch (TSU) is also connected to a signal circuit (SEU) with sound generator, ringing tone generator, code transmitter and receiver; the subscriber connection circuits (t1 ... t32 ...), the signal circuit (SEU) and the switch control unit (SESC) are connected to a decentral control unit (GP) comprising control means (SSP), processor (PU) and store (MU) via an associated signal buffer (SBU);

b) for the second development stage the time channel switches (TSU ...) of certain of the first development stages (LTG1, LTG2, LTG3) are connected in all combinations via intermediate lines (z12, z13, z23) via which extend time channels; in addition the decentral control units (GP ...) are connected by the time channel switches (TSU) of the first development stage to an appropriately constructed central control unit (CP) which co-operates in the establishment and disestablishment of connection paths which extend via a plurality of the first development stages (LTG1, LTG2);

c) in the third development stage the intermediate lines (z12, z13, z23) of the second development stage which serve to interconnect time channel switches of the first development stage which are provided in a large number, lead, as intermediate lines (zz) of the third development stage, to a one-stage central switching network (SN) which is equipped with a plurality of further time channel switches (TSU1 ... TSUm) and with its own switching network control (SGC) which is connected to the central control unit (CP) and via which switching network connections may be switched through between these intermediate lines (zz) in that they are in each case confined to time channels extending via these intermediate lines (zz);

d) in further development stages the central switching network (SN) possesses two time channel switching stages between which one or more than one space channel switching stage is interposed.

2. Exchange system as claimed in claim 1, characterised in that the central control unit (CP) and the multi-stage central switching network (SN) are provided in duplicate.

3. Exchange system as claimed in claim 1 or 2, characterised in that the decentral control unit (GP) of the first development stage (LTG1) handles switching functions which arise for each connection request and are subject to urgency, such as the interrogation of subscriber circuits, the processing of switching signals, charge metering, the supply of setting-up commands for the switch control, whereas the central control unit (CP) handles switching functions which must take into account the relationship between the subsidiary devices of the system and its relationship with other systems, and relieve the load on the decentral control units (GP) of the first development stage such as the evaluation of dialled digits, subscriber numbers, hunting for switching network outputs which may be used, the hunting and selection of connection paths and routing.

4. Exchange system as claimed in claim 3, characterised in that the control unit (GP) of the first development stage carries out a routine check on the associated subsidiary devices, such as the switching network (SES), the signalling circuit (SEU), and the subscriber connection circuits (t1 ... t32 ...) and, with the aid of time measurements, monitors the fact that the central control unit (CP) supplies, on the basis of fault messages, commands for the blocking of subsidiary devices or for rerouting.

5. Exchange system as claimed in one of the preceding claims, characterised in that the store (MU) of the decentral control unit (GP) in the first development stage contains variable items of data, such as data concerning existing connections, data concerning the seizure of time channels, data relating to charge pulses occurring in respect of individual connections, whereas the store (MUz) of the central control unit (CP) contains permanent items of data such as data for digit evaluation and for zoning, data relating to subscriber stations, data relating to the interconnection between the switching networks and other subsidiary devices within the system, and variable data relating to the state of seizure of subscriber stations, intermediate lines and connection lines, and relating to the operating state of other subsidiary devices.

6. Exchange system as claimed in one of the preceding claims, characterised in that the switching network (SES) of the first development stage and the central switching network (SN) of the other development stages are equipped with identical time channel switches (TSU, TSU1 ... TSUm) which in the central switching network (SN) are supplemented by transit time compensation devices.

7. Exchange system as claimed in one of the preceding claims, characterised in that the switching network (SES) of the first development stage is equipped with a multiconference device (MCU).

8. Exchange system as claimed in one of the preceding claims, characterised in that the subscriber connection circuits (e. g. t1 ... t32) are combined in groups to form multiple connection circuits (LTU1).

9. Exchange system as claimed in one of the preceding claims, characterised in that multiple connection circuits are provided composed of connection line connection circuits.

## Revendications

1. Système de commutation à commande indirecte avec joncteurs à division temporelle, en particulier système de commutation téléphonique, caractérisé par le fait que les tranches d'extension et d'agrandissement prévues pour l'installation sont organisées comme suit:

a) au coupleur des canaux temporels (TSU), non blocable et à étage unique, de la première tranche d'agrandissement (LTG1) et qui est pourvu d'une commande de coupleur (SESC) et d'un circuit d'amortissement (ATU), sont reliés des circuits d'abonnés (t1 ... t32 ...) dont chacun comporte des dispositifs BORSHT individuels et éventuellement de filtres et des Codecs-PCM; au coupleur de canaux temporels (TSU) est en outre relié un circuit de signaux (SEU) à générateur de son, à générateur d'appel et à émetteur et récepteur de code; les circuits d'abonnés (t1 ... t32; ...), le circuit de signaux (SEU) et la commande des coupleurs (SESC) sont reliés, par l'intermédiaire d'une mémoire-tampon de signes (SEU), à un organe de commande (GP) à organe de contrôle (SSP), à dispositif de traitement (PU) et à mémoire (MU);

b) pour une seconde tranche d'agrandissement, les coupleurs des canaux temporels (TSU ...) de quelques-unes des premières tranches d'agrandissement (LTG1, LTG2, LTG3) sont reliés selon toutes combinaisons possibles par l'intermédiaire de conducteurs intermédiaires (z12, z13, z23) par lesquels passent les canaux temporels; en outre, les organes de commande décentralisés (GP ...) sont reliés, par l'intermédiaire des coupleurs des canaux temporels (TSU) de la première tranche d'agrandissement, avec un organe de commande central (CP) constitué de façon correspondante et coagissant à l'établissement et à la coupure de voies de liaison passant par plusieurs tranches d'agrandissement (par exemple LTG1, LTG2);

c) dans la troisième tranche d'agrandissement, les conducteurs intermédiaires (z12, z13, z23) de la seconde tranche d'agrandissement qui servent à relier entre eux des coupleurs de canaux intermédiaires, prévus en grand nombre dans la première tranche d'agrandissement, mènent, en tant que conducteurs intermédiaires (zz), à un champ de couplage (SN) central et à étage unique, qui est pourvu de plusieurs autres coupleurs de canaux temporels (TSU1 ... TSUm) et d'une commande de champ de couplage (SGC) qui lui est propre et qui est relié à l'organe de commande central (CP), champ de couplage central (SN) par l'intermédiaire duquel les liaisons entre ces conducteurs intermédiaires (zz) peuvent être établi de telle manière qu'elles sont limitées à des canaux temporels qui passent par ces conducteurs intermédiaires (zz);

d) pour les autres tranches d'agrandissement, le champ de couplage central (SN) possède deux coupleurs de canaux temporels entre lesquels sont prévus un ou plusieurs étages de coupleurs de canaux spatiaux.

2. Système de commutation selon la revendication 1, caractérisé par le fait que l'organe de commande central (CP) et le champ de couplage central et à étages multiples (SN) sont prévus en double exemplaire.

3. Système de commutation selon la revendication 1 ou 2, caractérisé par le fait que l'organe de commande décentralisé (GP) de la première tranche d'agrandissement (LTG1) effectue des opérations de commutation qui se présentent pour chaque demande de liaison et qui se trouvent sous la pression du temps, la saisie des taxes, la fourniture d'instructions de réglage pour la commande des coupleurs, que par contre l'organe de commande central (CP) réalise des opérations de commutation qui doivent tenir compte de la relation entre les dispositifs partiels de l'installation et la relation de celle-ci avec d'autres installations, et déleste l'organe de commande décentralisé (GP) de la première tranche d'agrandissement, l'opération telle que l'évaluation des chiffres sélectionnés, de numéros d'appel, de la recherche de sortie du champ de couplage à utiliser, la recherche et la sélection de voies de liaison et de circuits de déviation.

4. Système de commutation selon la revendication 3, caractérisé par le fait que l'organe de commande (GP) de la première tranche d'agrandissement contrôle de façon permanente les installations partielles associées, telles que le champ de couplage (SES), le circuit de signalisation (SEU), les circuits de raccordement d'abonnés (t1 . . . t32, . . .), et contrôle, à l'aide de mesures du temps, que l'organe de commande central (CP) fournit, en réponse à des signalisations d'erreurs, des instructions pour bloquer des dispositifs partiels ou pour le branchement de dispositifs de remplacement.

5. Système de commutation selon l'une des revendications précédentes, caractérisé par le fait que dans la mémoire (MU) de l'organe de commande décentralisé (GP) de la première tranche d'agrandissement, sont contenues des données variables telles que des données sur des liaisons existantes, des données sur l'occupation de canaux temporels, des données relatives à des impulsions de taxation pour des liaison individuelles établies, que par contre sont contenues dans la mémoire (MUz) de l'organe de commande central (CP), des données permanentes telles que des données pour la pondération des chiffres et pour le zonage, des données relatives aux postes d'abonnés, des données relatives au rapport entre les champs de couplage ou autres dispositifs partiels de l'installation, ainsi que des données variables relatives à l'état d'occupation de postes d'abonnés, de conducteurs intermédiaires et de conducteurs de liaison et relatives à l'état de fonctionnement d'autres dispositifs partiels.

6. Système de commutation selon l'une des revendications précédentes, caractérisé par le fait que le champ de couplage (SES) de la première tranche d'agrandissement et le champ de couplage central (SN) des autres tranches d'agrandissement sont pourvus de mêmes coupleurs de canaux temporels (TSU, TSU1 . . . TSUm) qui sont complétés, dans le champ de couplage central (SN), par des dispositifs de compensation du temps de transit.

7. Système de commutation selon l'une des revendications précédentes, caractérisé par le fait que le champ de couplage (SES) de la première tranche d'agrandissement est pourvu d'un dispositif de conférences multiples (MCU).

8. Système de commutation selon l'une des revendications précédentes, caractérisé par le fait que les circuits de raccordement d'abonnés (par exemple t1 . . . t32) sont rassemblés en groupes de circuits multiples de raccordement (LTU1).

9. Système de commutation selon l'une des revendications précédentes, caractérisé par le fait que l'on prévoit des circuits de raccordement multiples constitués par les circuits de raccordement de lignes de liaison.